# FASCICULE DE BREVET EUROPEEN

(11) **EP 4 639 936 B1**
(45) Date de publication et mention de la délivrance du brevet: **11.11.2026**
(21) Numéro de dépôt: 23838088.5
(22) Date de dépôt: 22.12.2023
(51) Int. Cl.: H04W 12/03, H04L 9/40, G06Q 20/32, G07F 7/08, G06Q 20/02, G06Q 20/10, G06Q 20/20, G06Q 20/34, G06Q 20/38

(54) **PROCÉDÉ DE SÉCURISATION DE LA TRANSMISSION DE DONNÉES, ET SYSTÈME CORRESPONDANT**
VERFAHREN ZUR SICHERUNG DER ÜBERTRAGUNG VON DATEN UND ENTSPRECHENDES SYSTEM
METHOD FOR SECURING THE TRANSMISSION OF DATA AND CORRESPONDING SYSTEM

(30) Priorité: 22.12.2022 FR 2214215
(43) Date de publication de la demande: 29.10.2025
(73) Titulaire: Banks and Acquirers International Holding, 92150 Suresnes (FR)
(72) Inventeur: GRANDEMENGE, Jérome, 75015 PARIS (FR); BARIZIEN, Stéphane, 92150 SURESNES (FR)
(74) Mandataire: Germain Maureau
(86) Numéro de dépôt international: PCT/EP2023/087657
(87) Numéro de publication internationale: WO 2024/133906

(56) Documents cités:
- EP-A1- 3 499 444
- US-A1- 2004 104 268
- US-B1- 11 087 301

## Description

La présente invention concerne le domaine de la transmission sécurisée de données, par exemple pour des applications de télépaiement, et en particulier des applications logicielles configurées pour transformer en terminal de paiement un terminal mobile du commerce destiné au grand public, i.e. des utilisateurs non professionnels.

Il est connu d'utiliser une application logicielle pour transformer en terminal de paiement un terminal mobile du commerce, destiné à des clients non professionnels, par exemple un téléphone intelligent, de type smartphone en particulier, ou une tablette. Ladite application logicielle met en œuvre un procédé configuré pour assurer la saisie sur le terminal mobile des données relatives à la transaction, i.e. les données relatives au détenteur de la carte de paiement (CHD) et le code personnel d'identification (PIN) qui permet d'authentifier le détenteur de la carte de paiement. Il est ensuite nécessaire de transmettre du terminal mobile au serveur d'acceptation (SA) ces données relatives à la transaction (CHD, PIN). Pour protéger les données de la transaction (CHD, PIN) au cours de leur transmission au serveur d'acceptation, il est connu de les crypter.

Un cryptage simple nécessite l'utilisation de la clé de cryptage du serveur d'acceptation. Mais le stockage sur le terminal mobile de la clé de cryptage du serveur d'acceptation doit être évitée car le terminal mobile ne répond pas à des normes de sécurité suffisamment sûres.

L'invention a donc pour but de proposer une solution à tout ou partie de ces problèmes.

A cet effet, la présente invention concerne un procédé de transmission sécurisée de données entre un terminal mobile et un serveur d'acceptation, le terminal mobile étant configuré pour communiquer via un canal de communication avec un serveur de transchiffrement distant, et pour communiquer avec le serveur d'acceptation, le procédé comprenant les étapes suivantes mises en œuvre par le terminal mobile :
- réception, via le canal de communication, d'une première clé générée par le serveur de transchiffrement, la première clé étant variable ;
- cryptage des données avec la première clé ;
- transmission, via le canal de communication, au serveur de transchiffrement, des données cryptées avec la première clé ;
- réception, via le canal de communication, des données cryptées avec une deuxième clé par une boîte noire transactionnelle (BNT) du serveur de transchiffrement;
- transmission au serveur d'acceptation, des données cryptées avec la deuxième clé, la deuxième clé étant partagée entre le serveur de transchiffrement et le serveur d'acceptation, et n'étant pas transmise au terminal mobile.

Selon un mode de mise en œuvre, l'invention comprend une ou plusieurs des caractéristiques suivantes, seule ou en combinaison techniquement acceptable.

Selon un mode de mise en œuvre, le canal de communication est sécurisé.

Selon un mode de mise en œuvre, la première clé variable est à usage unique, i.e. est différente pour chaque mise en œuvre du procédé.

Selon un mode de mise en œuvre, la première clé est manipulée par le terminal mobile dans une mémoire volatile du terminal mobile.

Selon un aspect, l'invention concerne également un procédé de transmission sécurisée de données entre un terminal mobile et un serveur d'acceptation, le terminal mobile étant configuré pour communiquer, via un canal de communication, avec un serveur de transchiffrement distant comprenant une boîte noire transactionnelle, le procédé comprenant les étapes suivantes mises en œuvre par le serveur de transchiffrement :
- génération d'une première clé, la première clé étant variable;
- transmission, via le canal de communication, au terminal mobile, de la première clé;
- réception, via le canal de communication, en provenance du terminal mobile, des données cryptées par le terminal mobile avec la première clé;
- décryptage, par la boîte noire transactionnelle, avec la première clé, des données cryptées avec la première clé;
- cryptage des données, par la boîte noire transactionnelle, avec une deuxième clé;
- transmission, via le canal de communication, au terminal mobile, des données cryptées avec la deuxième clé, la deuxième clé étant partagée entre le serveur de transchiffrement et le serveur d'acceptation, et n'étant pas transmise au terminal mobile.

Selon un mode de mise en œuvre, l'invention comprend une ou plusieurs des caractéristiques suivantes, seule ou en combinaison techniquement acceptable.

Selon un mode de mise en œuvre, le canal de communication est sécurisé.

Selon un mode de mise en œuvre, la première clé variable est à usage unique, i.e. est différente pour chaque mise en œuvre du procédé.

Selon un mode de mise en œuvre, les données sont un code identifiant, ou code CHD, du compte associé à une carte de paiement et/ou un code d'authentification d'un titulaire d'un compte, par exemple les éléments d'un code PIN.

Selon un autre aspect, la présente invention concerne également un terminal mobile pour une transmission sécurisée de données avec un serveur d'acceptation, le terminal mobile comprenant un module de cryptage configuré pour crypter les données avec une première clé variable transmise par un serveur de transchiffrement distant, le terminal mobile comprenant en outre un module de transmission configuré pour recevoir, via un canal de communication, la première clé variable transmise par le serveur de transchiffrement et pour transmettre, via le canal de communication, au serveur de transchiffrement, les données cryptées avec la première clé, le module de transmission étant en outre configuré pour recevoir du serveur de transchiffrement, via le canal de communication, les données cryptées, avec une deuxième clé, par une boîte noire transactionnelle, puis pour transmettre au serveur d'acceptation, les données cryptées avec la deuxième clé, la deuxième clé étant partagée entre le serveur de transchiffrement et le serveur d'acceptation et n'étant pas transmise au terminal mobile.

Selon un mode de réalisation, le terminal mobile comprend en outre une mémoire volatile, la première clé étant manipulée dans la mémoire volatile du terminal mobile.

Selon encore un autre aspect, la présente invention concerne un serveur de transchiffrement distant pour une transmission sécurisée de données entre un terminal mobile et un serveur d'acceptation, le serveur de transchiffrement comprenant un module de génération configuré pour générer une première clé variable, et un module de transmission du serveur de transchiffrement configuré pour transmettre la première clé variable, via un canal de communication, au terminal mobile, le module de transmission du serveur de transchiffrement étant en outre configuré pour recevoir du terminal mobile, via le canal de communication, les données cryptées avec la première clé, le serveur de transchiffrement comprenant en outre une boîte noire transactionnelle configurée pour recevoir et décrypter les données cryptées avec la première clé variable, puis crypter les données avec une deuxième clé, puis pour transmettre, via le canal de communication, au terminal mobile, les données cryptées avec la deuxième clé, la deuxième clé étant partagée entre le serveur de transchiffrement et le serveur d'acceptation, et n'étant pas transmise au terminal mobile.

Selon un mode de réalisation, le module de génération et le module de transmission sont hébergés par un sous-serveur du serveur de transchiffrement, ledit sous-serveur étant distinct et disjoint de la boîte noire transactionnelle.

Selon encore un autre aspect, la présente invention concerne un système pour une transmission sécurisée de données entre un terminal mobile et un serveur d'acceptation, le système comprenant le terminal mobile selon le mode de réalisation décrit ci-dessus, et le serveur de transchiffrement selon le mode de réalisation décrit ci-dessus, le serveur d'acceptation étant configuré pour recevoir du terminal mobile les données chiffrées avec une clé partagée entre le serveur de transchiffrement et le serveur d'acceptation, ladite clé partagée n'étant pas transmise au terminal mobile.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.
[Fig. 1] est une représentation schématique du séquencement des étapes du procédé selon un mode de mise en œuvre de l'invention.
[Fig. 2] est une représentation schématique des composants d'un système selon un mode de réalisation de l'invention configuré pour la mise en œuvre de l'invention.

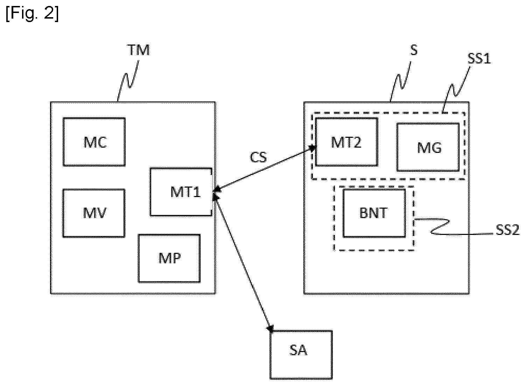

Un exemple de réalisation de l'invention est illustré schématiquement à la figure 2. Il comprend un terminal mobile TM et un serveur de transchiffrement S, le terminal mobile TM et le serveur de transchiffrement S étant configurés ensembles pour une transmission sécurisée de données entre le terminal mobile TM et un serveur d'acceptation SA. On notera que dans l'exemple décrit, le serveur de transchiffrement S est un serveur distant dans le nuage.

Le terminal mobile TM est par exemple un équipement destiné au grand public, non spécialisé, comprenant, de manière standard, un module matériel de transmission de données. Le terminal mobile est de préférence un téléphone intelligent ; il peut aussi être une tablette, ou un ordinateur portable par exemple, qui peut comprendre également un module de mémoire persistante MP, et un module de mémoire volatile MV, comme cela est illustré schématiquement sur la figure 2.

Sur le terminal mobile TM est téléchargé un module logiciel de cryptage MC; ledit module logiciel de cryptage MC est configuré pour crypter les données avec une première clé variable transmise par le serveur de transchiffrement S ; sur le terminal mobile TM est également téléchargée une application logicielle qui forme, avec le module matériel standard de transmission de données du terminal mobile TM, un module matériel et logiciel de transmission de données MT1 ; le module matériel et logiciel de transmission de données MT1 permet ainsi de recevoir via un canal de communication CS, la première clé variable transmise par le serveur de transchiffrement S et pour transmettre au serveur de transchiffrement S les données cryptées avec la première clé ; le module de transmission MT1 est en outre configuré pour recevoir du serveur de transchiffrement S, via le canal de communication CS, les données cryptées avec une deuxième clé, par une boîte noire transactionnelle BNT du serveur de transchiffrement S, puis pour transmettre au serveur d'acceptation SA, les données cryptées avec la deuxième clé ; la deuxième clé est partagée entre le serveur de transchiffrement S et le serveur d'acceptation SA et n'est pas stockée sur le terminal mobile TM. Par ailleurs, le serveur de transchiffrement S étant distant et non local, cela limite le risque de compromission, notamment physique, du serveur visant à extraire la première et/ou deuxième clé du serveur de transchiffrement.

Le canal de communication CS est un canal de communication de données entre le terminal mobile TM et le serveur de transchiffrement S ; le canal de communication CS est par exemple sécurisé pour mettre en œuvre un premier niveau de protection des données échangées via ce canal. Le canal de communication est sécurisé lorsqu'il permet une communication de données entre deux points authentifiés mutuellement, la communication étant protégée en confidentialité. Ce premier niveau de protection des données peut être assuré par exemple par un premier cryptage des données échangées via ce canal sécurisé, le procédé selon l'invention assurant un niveau supplémentaire de protection des données transmises par le terminal mobile au serveur d'application. Ainsi, le canal de communication sécurisé permet de garantir l'authenticité et la provenance de la première clé, puis des données cryptées avec la première clé, et de se protéger ainsi contre une attaque du type attaque par «l' homme du milieu» (MITM).

La première clé variable est, de préférence, une première clé à usage unique ; autrement dit, à chaque mise en oeuvre du procédé est utilisée une première clé différente de celle utilisée pour une mise en oeuvre précédente. Le niveau de protection est ainsi renforcé.

En particulier, la première clé est effacée immédiatement après l'étape de cryptage par le module de cryptage du terminal mobile, et de préférence avant l'étape de transmission qui suit l'étape de cryptage.

Plus particulièrement, la première clé est manipulée dans une mémoire volatile MV du terminal mobile TM; en tout état de cause, la première clé n'est jamais stockée dans un module de mémoire persistante MP du terminal mobile TM. Ainsi, le niveau de protection est encore renforcé.

Le serveur de transchiffrement S comprend un module de génération MG configuré pour générer une première clé variable, et un module de transmission MT2 du serveur de transchiffrement configuré pour transmettre la première clé variable, via le canal sécurisé CS, au terminal mobile TM, le module de transmission MT2 du serveur de transchiffrement étant en outre configuré pour recevoir du terminal mobile TM, via le canal sécurisé CS, les données cryptées avec la première clé. Le serveur de transchiffrement S étant distant, une communication réseau de longue distance est destinée à être établie entre le serveur de transchiffrement S et le terminal mobile TM. Ainsi, on notera que la taille des données transmises, et notamment la première clé, importent beaucoup sur la durée de traitement des données, en particulier impacte la rapidité de la communication.

Le serveur de transchiffrement comprend en outre une boîte noire transactionnelle BNT configurée pour recevoir et décrypter les données cryptées avec la première clé variable, puis pour crypter les données décryptées avec la deuxième clé, puis pour transmettre, via le canal sécurisé CS, au terminal mobile TM les données cryptées avec la deuxième clé, la deuxième clé étant partagée entre le serveur de transchiffrement S et le serveur d'acceptation SA.

Une boîte noire transactionnelle BNT, parfois appelé HSM ou SSM ou encore SHSM selon une désignation d'origine anglo-saxonne correspondant respectivement à « Hardware Security Module », ou à « Software Security Module », ou encore à « Software and Hardware Security Module », est un composant matériel ou logiciel offrant un service de sécurité qui consiste à générer, stocker et protéger des clefs cryptographiques.

Les HSMs répondent par exemple aux standards de sécurité internationaux tels que FIPS 140 et Critères Communs EAL4+.

Les modules de génération MG et de transmission MT peuvent être hébergés par un sous serveur SS1 du serveur S ; la boîte noire transactionnelle BNT peut également être hébergée par un autre sous-serveur SS2 du serveur S, distinct du sous-serveur SS1, le sous-serveur SS2 étant ainsi disjoint du sous-serveur SS1, pour un stockage non volatile de la deuxième clé, dans la boîte noire transactionnelle BNT.

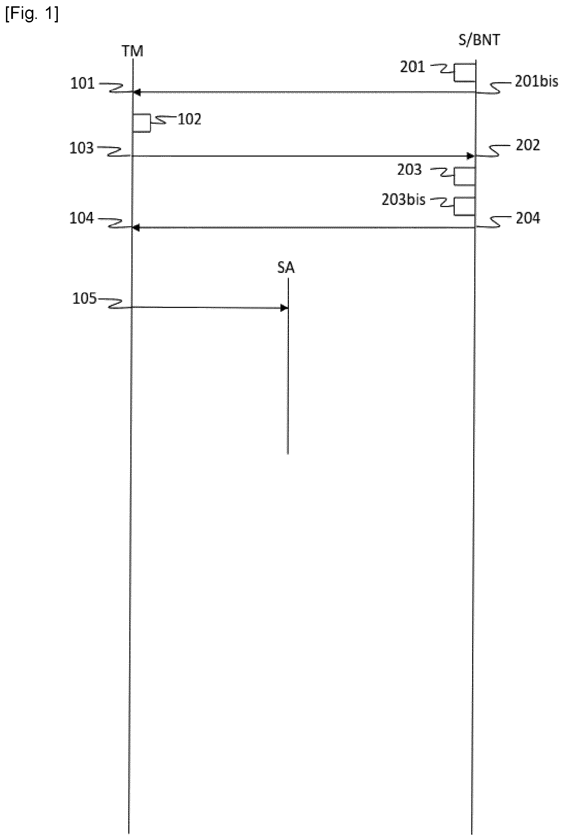

Selon un aspect, représenté schématiquement sur la figure 1 , l'invention concerne un procédé 100 de transmission sécurisée de données entre un terminal mobile TM et un serveur d'acceptation SA, le terminal mobile TM étant configuré pour communiquer via un canal de communication avec un serveur de transchiffrement S distant, et pour communiquer avec le serveur d'acceptation SA, le procédé 100 comprenant les étapes suivantes mises en œuvre par le terminal mobile TM :
- réception 101 via le canal de communication CS d'une première clé générée par le serveur de transchiffrement S, la première clé étant variable ;
- cryptage 102 des données avec la première clé ;
- transmission 103 au serveur de transchiffrement S, via le canal de communication CS, des données cryptées avec la première clé ;
- réception 104 via le canal de communication CS des données cryptées avec une deuxième clé, par une boîte noire transactionnelle BNT du serveur de transchiffrement S;
- transmission 105 au serveur d'acceptation SA, des données cryptées avec la deuxième clé, la deuxième clé étant partagée entre le serveur de transchiffrement S et le serveur d'acceptation SA, et n'étant pas transmise au terminal mobile TM.

Le canal de communication CS est par exemple sécurisé.

La première clé variable est, en particulier, à usage unique, i.e. est différente pour chaque mise en œuvre du procédé.

Plus particulièrement, la première clé est effacée immédiatement après l'étape de cryptage 102 par le module de cryptage MC du terminal mobile TM, et de préférence avant l'étape de transmission 103 qui suit l'étape de cryptage 102.

Selon un autre aspect, également représenté schématiquement sur la figure 1, l'invention concerne un procédé 200 de transmission sécurisée de données entre un terminal mobile TM et un serveur d'acceptation SA, le procédé 200 comprenant les étapes suivantes mises en œuvre par le serveur de transchiffrement S :
- génération 201 d'une première clé, la première clé étant variable;
- transmission 201bis, via le canal sécurisé CS, au terminal mobile TM de la première clé;
- réception 202, via le canal sécurisé CS, en provenance du terminal mobile des données cryptées par le terminal mobile TM avec la première clé;
- décryptage 203 par la boîte noire transactionnelle BNT avec la première clé des données cryptées avec la première clé ;
- cryptage 203bis des données par la boîte noire transactionnelle BNT avec une deuxième clé;
- transmission 204, via le canal sécurisé CS ,au terminal mobile TM des données cryptées avec la deuxième clé, la deuxième clé étant partagée entre le serveur de transchiffrement S et le serveur d'acceptation SA, et n'étant pas transmise au terminal mobile TM.

Par exemple, les données considérées peuvent être un code identifiant, ou code CHD, d'un compte associé à une carte de paiement et/ou un code d'authentification d'un titulaire du compte, par exemple les éléments d'un code PIN.

## Revendications

1. Procédé (100) de transmission sécurisée de données entre un terminal mobile (TM) et un serveur d'acceptation (SA), le terminal mobile (TM) étant configuré pour communiquer via un canal de communication (CS) avec un serveur de transchiffrement (S) distant, et pour communiquer avec le serveur d'acceptation (SA), le procédé (100) comprenant les étapes suivantes mises en œuvre par le terminal mobile (TM) :
- réception (101), via le canal de communication, d'une première clé générée par le serveur de transchiffrement (S), la première clé étant variable ;
- cryptage (102) des données avec la première clé ;
- transmission (103), via le canal de communication (CS), au serveur de transchiffrement (S) des données cryptées avec la première clé ;
- réception (104), via le canal de communication (CS), des données cryptées avec une deuxième clé par une boîte noire transactionnelle (BNT) du serveur de transchiffrement;
- transmission (105) au serveur d'acceptation (SA), des données cryptées avec la deuxième clé, la deuxième clé étant partagée entre le serveur de transchiffrement (S) et le serveur d'acceptation (SA) et n'étant pas transmise au terminal mobile (TM).

2. Procédé (100) selon la revendication précédente, dans lequel le canal de communication (CS) est sécurisé.

3. Procédé (100) selon l'une des revendications 1 ou 2, dans lequel la première clé variable est à usage unique, i.e. est différente pour chaque mise en œuvre du procédé (100).

4. Procédé (100) selon l'une des revendications 1 à 3, dans lequel la première clé est manipulée par le terminal mobile (TM) dans une mémoire volatile du terminal mobile (TM).

5. Procédé (200) de transmission sécurisée de données entre un terminal mobile (TM) et un serveur d'acceptation (SA), le terminal mobile (TM) étant configuré pour communiquer via un canal de communication (CS) avec un serveur de transchiffrement (S) distant comprenant une boîte noire transactionnelle (BNT), le procédé (200) comprenant les étapes suivantes mises en œuvre par le serveur de transchiffrement (S) :
- génération (201) d'une première clé, la première clé étant variable;
- transmission (201bis), via le canal de communication (CS), au terminal mobile (TM) de la première clé;
- réception (202), via le canal de communication (CS), en provenance du terminal mobile (TM), des données cryptées par le terminal mobile (TM) avec la première clé;
- décryptage (203), par la boîte noire transactionnelle (BNT), avec la première clé, des données cryptées avec la première clé ;
- cryptage (203bis) des données, par la boîte noire transactionnelle (BNT), avec une deuxième clé;
- transmission (204), via le canal de communication (CS), au terminal mobile (TM), des données cryptées avec la deuxième clé, la deuxième clé étant partagée entre le serveur de transchiffrement (S) et le serveur d'acceptation (SA), et n'étant pas transmise au terminal mobile (TM).

6. Procédé (200) selon la revendication précédente, dans lequel le canal de communication (CS) est sécurisé.

7. Procédé (200) selon l'une des revendications 5 ou 6, dans lequel la première clé variable est à usage unique, i.e. est différente pour chaque mise en œuvre du procédé (200).

8. Terminal mobile (TM) pour une transmission sécurisée de données avec un serveur d'acceptation (SA), le terminal mobile (TM) comprenant un module de cryptage (MC) configuré pour crypter les données avec une première clé variable transmise par un serveur de transchiffrement (S) distant, le terminal mobile (TM) comprenant en outre un module de transmission (MT1) configuré pour recevoir via un canal de communication la première clé variable transmise par le serveur de transchiffrement (S) et pour transmettre via le canal de communication au serveur de transchiffrement (S) les données cryptées avec la première clé, le module de transmission (MT1) étant en outre configuré pour recevoir du serveur de transchiffrement via le canal de communication les données cryptées avec une deuxième clé par une boîte noire transactionnelle (BNT) puis pour transmettre au serveur d'acceptation (SA), les données cryptées avec la deuxième clé, la deuxième clé étant partagée entre le serveur de transchiffrement (S) et le serveur d'acceptation (SA) et n'étant pas transmise au terminal mobile (TM).

9. Terminal mobile (TM) selon la revendication précédente, comprenant en outre une mémoire volatile (MV), la première clé étant manipulée dans la mémoire volatile (MV) du terminal mobile (TM).

10. Serveur de transchiffrement (S) distant pour une transmission sécurisée de données entre un terminal mobile (TM) et un serveur d'acceptation (SA), le serveur de transchiffrement (S) comprenant un module de génération (MG) configuré pour générer une première clé variable, et un module de transmission (MT2) du serveur de transchiffrement configuré pour transmettre la première clé variable, via un canal de communication, au terminal mobile (TM), le module de transmission (MT2) du serveur de transchiffrement étant en outre configuré pour recevoir du terminal mobile (TM), via le canal de communication, les données cryptées avec la première clé, le serveur de transchiffrement comprenant en outre une boîte noire transactionnelle (BNT) configurée pour recevoir et décrypter les données cryptées avec la première clé variable, puis crypter les données avec une deuxième clé, puis pour transmettre, via le canal de communication, au terminal mobile (TM) les données cryptées avec la deuxième clé, la deuxième clé étant partagée entre le serveur de transchiffrement (S) et le serveur d'acceptation (SA), et n'étant pas transmise au terminal mobile (TM).

11. Serveur de transchiffrement (S) selon la revendication précédente, dans lequel le module de génération (MG) et le module de transmission (MT2) sont hébergés par un sous-serveur (SS1) du serveur de transchiffrement (S), ledit sous-serveur (SS1) étant distinct et disjoint de la boîte noire transactionnelle (BNT).

12. Système pour une transmission sécurisée de données entre un terminal mobile (TM) et un serveur d'acceptation (SA), le système comprenant le terminal mobile selon la revendication 8 ou 9, et un serveur de transchiffrement (S) selon la revendication 10 ou 11, et le serveur d'acceptation étant configuré pour recevoir du terminal mobile (TM) les données chiffrées avec une clé partagée entre le serveur de transchiffrement (S) et le serveur d'acceptation (SA), la clé partagée n'étant pas transmise au terminal mobile (TM).

## Patentansprüche

1. Verfahren (100) zur sicheren Datenübertragung zwischen einem mobilen Endgerät (TM) und einem Akzeptanzserver (SA), wobei das mobile Endgerät (TM) so konfiguriert ist, dass es über einen Kommunikationskanal (CS) mit einem entfernten Umverschlüsselungsserver (S) kommuniziert und mit dem Akzeptanzserver (SA) kommuniziert, wobei das Verfahren (100) die folgenden Schritte umfasst, die vom mobilen Endgerät (TM) durchgeführt werden:
- Empfangen (101) eines ersten Schlüssels, der vom Umverschlüsselungsserver (S) erzeugt wird, über den Kommunikationskanal, wobei der erste Schlüssel variabel ist;
- Verschlüsseln (102) der Daten mit dem ersten Schlüssel;
- Übertragen (103) der mit dem ersten Schlüssel verschlüsselten Daten über den Kommunikationskanal (CS) an den Umverschlüsselungsserver (S);
- Empfangen (104) von Daten, die mit einem zweiten Schlüssel durch eine Transaktions-Blackbox (BNT) verschlüsselt sind, über den Kommunikationskanal (CS) vom Umverschlüsselungsserver;
- Übertragen (105) von mit dem zweiten Schlüssel verschlüsselten Daten an den Akzeptanzserver (SA), wobei der zweite Schlüssel zwischen dem Umverschlüsselungsserver (S) und dem Akzeptanzserver (SA) geteilt wird und nicht an das mobile Endgerät (TM) übertragen wird.

2. Verfahren (100) nach dem vorhergehenden Anspruch, wobei der Kommunikationskanal (CS) gesichert ist.

3. Verfahren (100) nach einem der Ansprüche 1 oder 2, wobei der erste variable Schlüssel einmal verwendbar ist, d. h. für jede Durchführung des Verfahrens (100) unterschiedlich ist.

4. Verfahren (100) nach einem der Ansprüche 1 bis 3, wobei der erste Schlüssel vom mobilen Endgerät (TM) in einem flüchtigen Speicher des mobilen Endgeräts (TM) verwaltet wird.

5. Verfahren (200) zur sicheren Datenübertragung zwischen einem mobilen Endgerät (TM) und einem Akzeptanzserver (SA), wobei das mobile Endgerät (TM) so konfiguriert ist, dass es über einen Kommunikationskanal (CS) mit einem entfernten Umverschlüsselungsserver (S) kommuniziert, der eine Transaktions-Blackbox (BNT) umfasst, wobei das Verfahren (200) die folgenden Schritte umfasst, die vom Umverschlüsselungsserver (S) durchgeführt werden:
- Erzeugen (201) eines ersten Schlüssels, wobei der erste Schlüssel variabel ist;
- Übertragen (201bis) des ersten Schlüssels über den Kommunikationskanal (CS) an das mobile Endgerät (TM);
- Empfangen (202) von Daten, die vom mobilen Endgerät (TM) mit dem ersten Schlüssel verschlüsselt sind, über den Kommunikationskanal (CS) von dem mobilen Endgerät (TM);
- Entschlüsseln (203) der mit dem ersten Schlüssel verschlüsselten Daten durch die Transaktions-Blackbox (BNT) mit dem ersten Schlüssel;
- Verschlüsseln (203bis) der Daten durch die Transaktions-Blackbox (BNT) mit einem zweiten Schlüssel;
- Übertragen (204) der mit dem zweiten Schlüssel verschlüsselten Daten über den Kommunikationskanal (CS) an das mobile Endgerät (TM), wobei der zweite Schlüssel zwischen dem Umverschlüsselungsserver (S) und dem Akzeptanzserver (SA) geteilt wird und nicht an das mobile Endgerät (TM) übertragen wird.

6. Verfahren (200) nach dem vorhergehenden Anspruch, wobei der Kommunikationskanal (CS) gesichert ist.

7. Verfahren (200) nach einem der Ansprüche 5 oder 6, wobei der erste variable Schlüssel einmal verwendbar ist, d. h. für jede Durchführung des Verfahrens (200) unterschiedlich ist.

8. Mobiles Endgerät (TM) für eine sichere Datenübertragung mit einem Akzeptanzserver (SA), wobei das mobile Endgerät (TM) ein Verschlüsselungsmodul (MC) umfasst, das so konfiguriert ist, dass es die Daten mit einem ersten variablen Schlüssel verschlüsselt, der von einem entfernten Umverschlüsselungsserver (S) übertragen wird, wobei das mobile Endgerät (TM) ferner ein Übertragungsmodul (MT1) umfasst, das so konfiguriert ist, dass es über einen Kommunikationskanal den ersten variablen Schlüssel empfängt, der vom Umverschlüsselungsserver (S) übertragen wird, und die mit dem ersten Schlüssel verschlüsselten Daten über den Kommunikationskanal an den Umverschlüsselungsserver (S) überträgt, wobei das Übertragungsmodul (MT1) ferner so konfiguriert ist, dass es die Daten, die mit einem zweiten Schlüssel durch eine Transaktions-Blackbox (BNT) verschlüsselt sind, über den Kommunikationskanal vom Umverschlüsselungsserver empfängt und dann die mit dem zweiten Schlüssel verschlüsselten Daten an den Akzeptanzserver (SA) überträgt, wobei der zweite Schlüssel zwischen dem Umverschlüsselungsserver (S) und dem Akzeptanzserver (SA) geteilt wird und nicht an das mobile Endgerät (TM) übertragen wird.

9. Mobiles Endgerät (TM) nach dem vorhergehenden Anspruch, ferner umfassend einen flüchtigen Speicher (MV), wobei der erste Schlüssel im flüchtigen Speicher (MV) des mobilen Endgeräts (TM) verwaltet wird.

10. Entfernter Umverschlüsselungsserver (S) für eine sichere Datenübertragung zwischen einem mobilen Endgerät (TM) und einem Akzeptanzserver (SA), wobei der Umverschlüsselungsserver (S) ein Erzeugungsmodul (MG), das so konfiguriert ist, dass es einen ersten variablen Schlüssel erzeugt, und ein Übertragungsmodul (MT2) des Umverschlüsselungsservers umfasst, das so konfiguriert ist, dass es den ersten variablen Schlüssel über einen Kommunikationskanal an das mobile Endgerät (TM) überträgt, wobei das Übertragungsmodul (MT2) des Umverschlüsselungsservers ferner so konfiguriert ist, dass er über den Kommunikationskanal vom mobilen Endgerät (TM) die mit dem ersten Schlüssel verschlüsselten Daten empfängt, wobei der Umverschlüsselungsserver ferner eine Transaktions-Blackbox (BNT) umfasst, die so konfiguriert ist, dass sie die mit dem ersten variablen Schlüssel verschlüsselten Daten empfängt und entschlüsselt, dann die Daten mit einem zweiten Schlüssel verschlüsselt und dann die mit dem zweiten Schlüssel verschlüsselten Daten über den Kommunikationskanal an das mobile Endgerät (TM) überträgt, wobei der zweite Schlüssel zwischen dem Umverschlüsselungsserver (S) und dem Akzeptanzserver (SA) geteilt wird und nicht an das mobile Endgerät (TM) übertragen wird.

11. Umverschlüsselungsserver (S) nach dem vorhergehenden Anspruch, wobei das Erzeugungsmodul (MG) und das Übertragungsmodul (MT2) von einem Unterserver (SS1) des Umverschlüsselungsservers (S) gehostet werden, wobei der Unterserver (SS1) von der Transaktions-Blackbox (BNT) getrennt und unabhängig ist.

12. System für eine sichere Datenübertragung zwischen einem mobilen Endgerät (TM) und einem Akzeptanzserver (SA), wobei das System das mobile Endgerät nach Anspruch 8 oder 9 und einen Umverschlüsselungsserver (S) nach Anspruch 10 oder 11 umfasst, und der Akzeptanzserver so konfiguriert ist, dass er vom mobilen Endgerät (TM) die Daten empfängt, die mit einem zwischen dem Umverschlüsselungsserver (S) und dem Akzeptanzserver (SA) geteilten Schlüssel verschlüsselt sind, wobei der geteilte Schlüssel nicht an das mobile Endgerät (TM) übertragen wird.

## Claims

1. A method (100) for secure transmission of data between a mobile terminal (TM) and an acceptance server (SA), the mobile terminal (TM) being configured to communicate via a communication channel (CS) with a remote transciphering server (S), and to communicate with the acceptance server (SA), the method (100) comprising the following steps implemented by the mobile terminal (TM):
- receiving (101), via the communication channel, a first key generated by the transciphering server (S), the first key being variable;
- encrypting (102) the data with the first key;
- transmitting (103), via the communication channel (CS), to the transciphering server (S) the data encrypted with the first key;
- receiving (104), via the communication channel (CS), the data encrypted with a second key by a transactional black box (BNT) of the transciphering server;
- transmitting (105) to the acceptance server (SA) the encrypted data with the second key, the second key being shared between the transciphering server (S) and the acceptance server (SA) and not being transmitted to the mobile terminal (TM).

2. The method (100) according to the preceding claim, wherein the communication channel (CS) is secure.

3. The method (100) according to any of claims 1 or 2, wherein the first variable key is single-use, that is to say is different for each implementation of the method (100).

4. The method (100) according to any of claims 1 to 3, wherein the first key is manipulated by the mobile terminal (TM) in a volatile memory of the mobile terminal (TM).

5. The method (200) for secure transmission of data between a mobile terminal (TM) and an acceptance server (SA), the mobile terminal (TM) being configured to communicate via a communication channel (CS) with a remote transciphering server (S) comprising a transactional black box (BNT), the method (200) comprising the following steps implemented by the transciphering server (S):
- generating (201) a first key, the first key being variable;
- transmitting (201bis), via the communication channel (CS), to the mobile terminal (TM) the first key;
- receiving (202), via the communication channel (CS), from the mobile terminal (TM), the data encrypted by the mobile terminal (TM) with the first key;
- decrypting (203), by the transactional black box (BNT), with the first key, the data encrypted with the first key;
- encrypting (203bis) the data, by the transactional black box (BNT), with a second key;
- transmitting (204), via the communication channel (CS), to the mobile terminal (TM), the data encrypted with the second key, the second key being shared between the transciphering server (S) and the acceptance server (SA), and not being transmitted to the mobile terminal (TM).

6. The method (200) according to the preceding claim, wherein the communication channel (CS) is secure.

7. The method (200) according to any of claims 5 or 6, wherein the first variable key is single-use, that is to say is different for each implementation of the method (200).

8. A mobile terminal (TM) for the secure transmission of data with an acceptance server (SA), the mobile terminal (TM) comprising an encryption module (MC) configured to encrypt the data with a first variable key transmitted by a remote transciphering server (S), the mobile terminal (TM) further comprising a transmission module (MT1) configured to receive, via a communication channel, the first variable key transmitted by the transciphering server (S) and to transmit, via the communication channel, to the transciphering server (S), the data encrypted with the first key, the transmission module (MT1) being further configured to receive from the transciphering server, via the communication channel, the data encrypted with a second key by a transactional black box (BNT), and then to transmit to the acceptance server (SA), the data encrypted with the second key, the second key being shared between the transciphering server (S) and the acceptance server (SA) and not being transmitted to the mobile terminal (TM).

9. The mobile terminal (TM) according to the preceding claim, further comprising a volatile memory (MV), the first key being manipulated in the volatile memory (MV) of the mobile terminal (TM).

10. A remote transciphering server (S) for the secure transmission of data between a mobile terminal (TM) and an acceptance server (SA), the transciphering server (S) comprising a generation module (MG) configured to generate a first variable key, and a transmission module (MT2) of the transciphering server configured to transmit the first variable key, via a communication channel, to the mobile terminal (TM), the transmission module (MT2) of the transciphering server being further configured to receive from the mobile terminal (TM), via the communication channel, the data encrypted with the first key, the transciphering server further comprising a transactional black box (BNT) configured to receive and decrypt the data encrypted with the first variable key, then to encrypt the data with a second key, and then to transmit, via the communication channel, to the mobile terminal (TM) the data encrypted with the second key, the second key being shared between the transciphering server (S) and the acceptance server (SA), and not being transmitted to the mobile terminal (TM).

11. The transciphering server (S) according to the preceding claim, wherein the generation module (MG) and the transmission module (MT2) are hosted by a sub-server (SS1) of the transciphering server (S), said sub-server (SS1) being distinct and separate from the transactional black box (BNT).

12. A system for the secure transmission of data between a mobile terminal (TM) and an acceptance server (SA), the system comprising the mobile terminal according to claim 8 or 9 and a transciphering server (S) according to claim 10 or 11, and the acceptance server being configured to receive from the mobile terminal (TM) the data encrypted with a key shared between the transciphering server (S) and the acceptance server (SA), the shared key not being transmitted to the mobile terminal (TM).
